**Europäisches Patentamt**

**European Patent Office**

**Office européen des brevets**

(11) Numéro de publication: **0 142 392**
**A2**

## (12) DEMANDE DE BREVET EUROPEEN

(21) Numéro de dépôt: **84401773.1**

(22) Date de dépôt: **07.09.84**

(51) Int. Cl.⁴: **G 02 B 6/32**

(30) Priorité: **09.09.83 FR 8314379**

(43) Date de publication de la demande:
**22.05.85 Bulletin 85/21**

(84) Etats contractants désignés:
**AT BE CH DE FR GB IT LI LU NL SE**

(71) Demandeur: **SOCIETE D'OPTIQUE, PRECISION
ELECTRONIQUE ET MECANIQUE - SOPELEM
102 rue Chaptal
F-92300 Levallois-Perret(FR)**

(72) Inventeur: **Sellin, Rémy
42 allée Louis Braille
F-77400 Lagny-Sur-Marne(FR)**

(72) Inventeur: **Baluteau, Jean-Michel
77 allée de Chartres
F-93190 Livry-Gargan(FR)**

(72) Inventeur: **Fillol, Bernard
56 rue Labrouste
F-75015 Paris(FR)**

(72) Inventeur: **Moirez, Jacques
4 avenue des Gobelins
F-75005 Paris(FR)**

(72) Inventeur: **Saint-Sevin, Michel
1bis rue des 3 Soeurs
F-93220 Gagny(FR)**

(74) Mandataire: **Phélip, Bruno et al,
c/o Cabinet Harlé & Phélip 21, rue de la Rochefoucauld
F-75009 Paris(FR)**

(54) Dispositif de couplage de câbles de fibres optiques.

(57) La présente invention se rapporte à un dispositif couplant des cables (1, 2) de fibres optiques par un système optique comportant un objectif convergent (3).

Il est caractérisé par le fait que les fibres (11), (21) des deux câbles sont disposées de manière que leurs extrémités soient situées d'un même côté dudit objectif (3) en étant dirigées vers celui-ci et par le fait que le système optique comporte un réflecteur (4) fixe et situé de l'autre côté des câbles par rapport à l'objectif de manière que les rayons lumineux issus d'une fibre émettrice, après avoir traversé l'objectif soient réfléchis vers ledit objectif qui les focalise sur la fibre réceptrice conjuguéefig. 1

EP 0 142 392 A2

# Dispositif de couplage de câbles de fibres optiques

La présente invention se rapporte à un dispositif couplant, par un système optique, des câbles de fibres optiques entre eux. Ce dispositif est notamment utilisable comme connecteur de cables de fibres optiques.

On connaît des dispositifs de couplage de deux fibres optiques ou de deux câbles de fibres optiques au moyen d'un système optique formé de plusieurs objectifs séparés et disposés entre les dites fibres dont les extrémités s'opposent. Les variations des focales de ces objectifs entrainent des pertes au couplage des fibres.

La présente invention a pour but de pallier les inconvénients des dispositifs connus du point de vue des variations de focales et de minimiser les pertes de flux au couplage en les annulant théoriquement. Elle fournit un dispositif qui assure le couplage simultané des fibres d'un câble avec les fibres de l'autre câble en en conjuguant toute fibre de l'un à une fibre de l'autre. La conception du système optique de couplage est très simple et elle permet de disposer tous les cables de fibres optiques d'un même côté de ce système.

Le dispositif selon l'invention couple des câbles de fibres optiques par l'intermédiaire d'un système optique comportant un objectif convergent et il est caractérisé par le fait que les fibres des câbles sont disposées de manière que leurs extrémités soient situées d'un même côté dudit objectif en étant dirigées vers celui-ci et par le fait que le système optique comporte un réflecteur fixe, situé de l'autre côté des câbles par rapport à l'objectif de manière que les rayons lumineux issus d'une fibre émettrice, après avoir traversé l'objectif, soient réfléchis vers ledit objectif qui les focalise sur la fibre optique conjuguée.

Selon une caractéristique de l'invention, les extrémités des fibres des câbles sont sensiblement situées dans un plan focal de l'objectif et la surface réflèchissante du réflecteur est sensiblement située dans l'autre plan focal dudit objectif.

L'invention va maintenant être décrite avec plus de détails en se référant à des modes de réalisation donnés à titre d'exemple et représentés par les dessins annexés.

La figure 1 représente schématiquement un mode de réalisation du type connecteur.

La figure 2 représente une coupe selon AA de la figure 1.

La figure 3 représente un autre mode de réalisation du dispositif

La figure 4 représente une coupe selon BB de la figure 3.

Le dispositif couple deux câbles 1 et 2 qui groupent chacun une pluralité de fibres optiques repèrées 11 et 21 respectivement.

Les câbles 1 et 2 sont situés d'un même côté du système optique de couplage. Celui-ci est constitué par un objectif convergent 3 et par un réflecteur 4. L'objectif 3 comporte de préférence au moins deux lentilles. Le réflecteur 4, de type miroir, est situé de l'autre côté des fibres par rapport à l'objectif 3. Il reçoit les signaux lumineux à la sortie de l'objectif et les réflèchit sur ledit objectif. Il est monté de manière fixe par rapport à l'objectif aux fibres et au boitier contenant l'objectif et le réflecteur.

Le miroir 4 est séparé de l'objectif 3 par un intervalle d'air qui est égal à la distance focale de l'objectif. La surface réflèchissante plane du miroir 4 est située dans le plan focal de l'objectif 3. Elle est perpendiculaire à l'axe optique 5.

Les fibres optiques 11 et 21 sont parallèles à l'axe optique 5, leurs extrémités étant dirigées vers l'objectif. Ces extrémités de fibres sont situées dans le plan focal de l'objectif qui est symétrique du plan focal situé au niveau du miroir. Elles sont disposées de manière qu'une extrémité de fibre soit symétrique d'une autre extrémité de fibre, par rapport à l'axe optique.

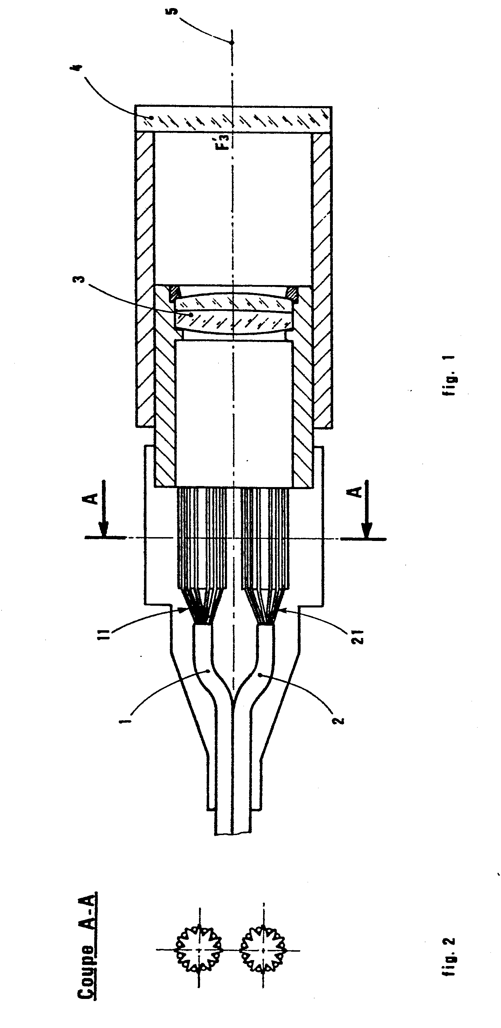

Dans le mode de réalisation des figures 1 et 2, les extrémités des deux câbles optiques sont fixées sur deux pièces distinctes et déconnectables ce qui permet la réalisation d'un connecteur. A titre indicatif, les extrémités des fibres de chaque cable peuvent être disposées selon des génératrices d'un cylindre rainuré, les deux cylindres étant symétriques par rapport à l'axe optique.

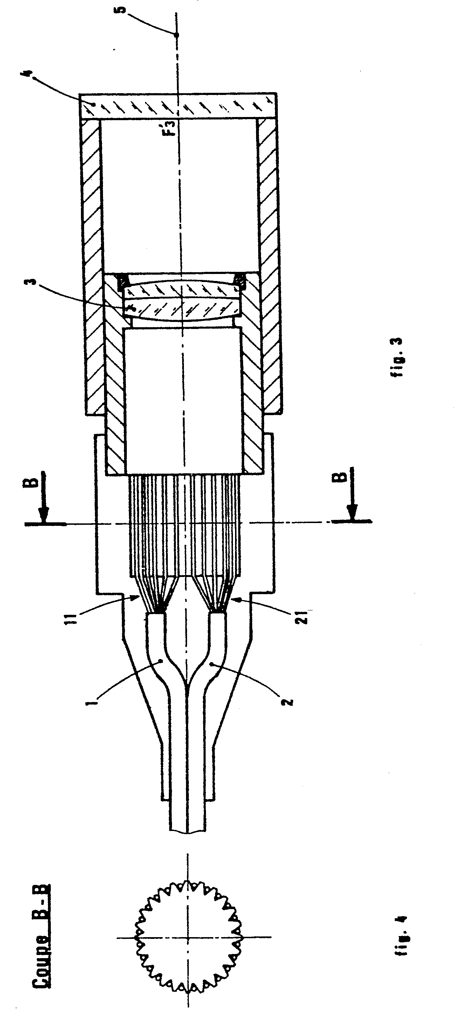

Dans le mode de réalisation des figures 3 et 4, les extrémités des fibres optiques sont fixées sur une pièce solidaire du boitier du dispositif. A titre indicatif, les extrémités des fibres peuvent être disposées selon des génératrices d'un cylindre rainuré centré sur l'axe optique. Avec ce mode de réalisation le champ de l'objectif 3 est le plus faible possible et la structure de l'objectif est la plus simple possible.

Les fibres 11 et 21 et l'objectif 3 sont séparés par un intervalle d'air. Les fibres 11 et 21 pourraient être collées sur un bloc de verre séparé de l'objectif.

En variante du mode de réalisation ci-dessus, le dispositif pourrait comporter un bloc de verre faisant la jonction entre les extrémités des fibres 11 et 21 et la face de l'objectif située du côté de ces fibres, ce bloc de verre étant collé auxdites extrémités et à ladite face. Cette solution éviterait les problèmes de dilatation et permettrait de diminuer les pertes aux entrées et aux sorties des fibres qui ne sont pas des surfaces traitées.

Bien que le réflecteur 4 soit fixe en fonctionnement, il est possible de prévoir des moyens de réglage de son orientation pour optimiser le couplage des cables.

Le fonctionnement du dispositif va maintenant être expliqué.

On considèrera que les fibres 11 du cable 1 sont émettrices, simultanément ou non, et que les fibres 21 du cable 2 sont réceptrices.

Le signal ou faisceau lumineux issu d'une fibre d'émission quelconque, après avoir traversé l'objectif 3, est réfléchi par le miroir 4 vers l'objectif 3 qui le focalise sur une fibre réceptrice. Les extrémités des deux fibres ainsi conjuguées sont symétriques par rapport à l'axe optique.

Le flux émis par un point de la surface de sortie d'une fibre émettrice se situe dans un cône dont l'axe est normal à ladite surface. De la même façon la fibre de réception ne transmet que des rayons arrivant dans un cône dont l'axe est normal à la surface d'entrée de cette fibre. Du fait que la surface réflectrice du miroir 4 est contenue dans le plan focal de l'objectif, tous les axes des cônes de lumière émis par les points lumineux de la surface de sortie d'une fibre émettrice arrivent perpendiculairement sur la surface d'entrée de la fibre réceptrice.

Autrement dit, le dispositif optique décrit constitue un système télécentrique tel que la pupille d'entrée et la pupille de sortie sont rejetées à l'infini, la pupille intermédiaire étant située dans le plan focal de l'objectif donc sur la surface réflectrice du miroir.

Le couplage optimum est obtenu lorsque les extrémités des fibres optiques 11, 21 sont situées dans le plan focal objet de l'objectif et lorsque la surface réfléchissante du miroir est située dans le plan focal image dudit objectif. Si la coïncidence de la surface réfléchissante avec le plan focal image et si le positionnement des extrémités des fibres dans le plan focal objet ne sont pas réalisés à quelques pourcents près, les pertes de couplage deviennent importantes et le couplage n'est plus admissible.

Il est bien entendu que l'on peut sans sortir du cadre de l'invention imaginer des variantes et des perfectionnements de détails et de même envisager l'emploi de moyens équivalents. Les extrémités des fibres pourraient être disposées autrement que sur un cylindre.

## REVENDICATIONS

1. Dispositif de couplage de câbles (1), (2) de fibres optiques par l'intermédiaire d'un système optique comportant un objectif convergent, caractérisé par le fait que les fibres (11), (21) des deux câbles sont disposées de manière que leurs extrémités soient situées d'un même côté dudit objectif (3) en étant dirigées vers celui-ci et par le fait que le système optique comporte un réflecteur (4) fixe et situé de l'autre côté des câbles par rapport à l'objectif de manière que les rayons lumineux issus d'une fibre émettrice, après avoir traversé l'objectif soient réfléchis vers ledit objectif qui les focalise sur la fibre réceptrice conjuguée.

2. Dispositif selon la revendication 1, caractérisé par le fait que les extrémités des fibres (11, (21) des deux câbles sont sensiblement situées dans un plan focal de l'objectif et que la surface réfléchissante du réflecteur est sensiblement située dans l'autre plan focal dudit objectif.

3. Dispositif selon l'une quelconque des revendications précédentes, caractérisé par le fait qu'il comporte un bloc de verre faisant la jonction entre les extrémités des fibres (11), (21) et l'objectif (3).

Coupe A-A

fig. 2

fig. 1

0142392

Coupe B-B

B

B

11

1

2

21

3

4

5

F'3

fig. 4

fig. 3

0142392